(19)

Europäisches
Patentamt

European
Patent Office

Office européen
des brevets

(11) **EP 1 704 013 B1**

(12) **EUROPEAN PATENT SPECIFICATION**

(45) Date of publication and mention
of the grant of the patent:
**08.08.2012 Bulletin 2012/32**

(51) Int Cl.:
***B23K 9/095*** *(2006.01)*        ***B23K 9/173*** *(2006.01)*
***B23K 9/18*** *(2006.01)*

(21) Application number: **04782884.3**

(22) Date of filing: **01.09.2004**

(86) International application number:
**PCT/US2004/028473**

(87) International publication number:
**WO 2005/068124 (28.07.2005 Gazette 2005/30)**

(54) **METHOD OF AND TANDEM WELDING SYSTEM FOR QUALITY CONTROL OF SUCH TANDEM WELDING**

VERFAHREN UND SYSTEM ZUR QUALITÄTSKONTROLLE EINES SOLCHEN TANDEM-LICHTBOGENSCHWEISSSYSTEMS

METHODE ET SYSTEME DE CONTROLE DE QUALITE D'UN TEL SYSTEME DE SOUDAGE A L'ARC EN TANDEM

(84) Designated Contracting States:
**DE IT**

(30) Priority: **22.12.2003 US 741140**

(43) Date of publication of application:
**27.09.2006 Bulletin 2006/39**

(73) Proprietor: **Lincoln Global, Inc.**
**City of Industry, CA 91748 (US)**

(72) Inventors:
• **BLANKENSHIP, George, D.**
**Chardon, OH 44024 (US)**
• **BRANT, Dmitry**
**Richmond Heights, HO 44143 (US)**

• **HILLEN, Edward, Dennis**
**Painesville, OH 44077 (US)**

(74) Representative: **GROSSE SCHUMACHER**
**KNAUER VON HIRSCHHAUSEN**
**Patent- und Rechtsanwälte**
**Frühlingstrasse 43A**
**45133 Essen (DE)**

(56) References cited:
**JP-A- 61 017 364        JP-A- 2000 084 669**
**US-A- 3 150 624        US-A- 4 806 735**
**US-A- 4 827 101        US-A- 6 150 631**
**US-A1- 2003 071 024        US-B1- 6 207 929**
**US-B1- 6 207 929        US-B1- 6 472 634**

**Description**

The following relates to the art of electric arc welding, more particularly to an electric arc welding system employing tandem electrodes, an electrode having tandem electrode wires, or the like, and still more particularly to a method for monitoring a tandem welding process and a tandem welding system according to the preambles of claim 1 and 10, respectively ( see, *for* example, JP 2000/084669).

BACKGROUND ART

This disclosure relates to an electric arc welding system utilizing power supplies for driving two or more tandem electrodes. Such a system is used, for example, in seam welding of large metal blanks. While substantially any arc welding power supply can be used, the power supplies disclosed in Stava 6,111,216 are suitable used in one embodiment. The concept of arc welding using tandem electrodes is disclosed, for example, in Stava et al. 6,207,929, in Stava 6,291,798, and in Houston et al. 6,472,634. The determination of heat input values in the case of a waveform-controlled welding embodiment is disclosed at least in Hsu, U.S. published application 2003-0071024 Al.

**BACKGROUND**

Welding applications, such as pipe welding, often require high currents and use several arcs created by tandem electrodes. Such tandem welding systems are described, for example, in Stava 6,207,929 and Stava 6,291, 798. Houston 6,472, 634 discloses the concept of a single AC arc welding cell for each electrode wherein the cell itself includes one or more paralleled power supplies each of which has its own switching network. The output of the switching network is then combined to drive the electrode. The power supplies can be paralleled to build a high current input to each of several electrodes used in a tandem welding operation.

Stava 6,291, 798 discloses a series of tandem electrodes movable along a welding path to lay successive welding beads in the space between the edges of a rolled pipe or the ends of two adjacent pipe sections. The individual AC waveforms are suitably created by a number of current pulses occurring at a frequency of at least 18 kHz with a magnitude of each current pulse controlled by a wave shaper. This technology dates back to Blankenship 5,278, 390. In Stava 6,207, 929, the frequency of the AC current at adjacent tandem electrodes is adjusted to prevent magnetic interference.

Computation of the heat input in the case of waveform controlled welding is complicated by the complex shape of the voltage and current waveforms. A product of the rms current times the rms voltage provides a measure of the heat input, but such a computation does not take into account the precise shape of the waveform and possible phase offsets between the voltage and current. A generally more accurate method for computing heat input in waveform controlled welding is described in Hsu, U. S. published application 2003-0071024 Al.

In JP 2000/084669 a first and a second electrode are arranged next to each other, so that the welds they generate run parallel. The voltage of each of the electrodes is measured by a voltage controller and compared with a preset voltage value. In case of a deviation of the measured voltage value form the preset value the welding voltage is corrected in order to maintain a constant level.

According to the US 4 827 101 A an electrical signal between the electrode and a flux adhered to the back side of the workpiece is measured to control the uniformity of the weld bead generated by a tandem electrode. This electrical signal is compared to a reference value. In case of a deviation from the predefined value a welding parameter, e. g. the weld current of the weld power source, is varied.

One difficulty with tandem welding is characterizing and monitoring the quality of the tandem weld. Analysis of tandem arc welding is complicated due to the use of multiple electrode wires for depositing metal simultaneously but at spatially separated positions. The electrode wires of the tandem electrodes may have different wire diameters. The wire feed speed of each electrode may be independently dynamically adjusted for each electrode to control the arc length or other welding characteristics. In some tandem arc welding applications, a combination of electrodes operating using d.c. current and a.c. current may be employed, for example to reduce interference between the electrodes. Still further, the voltage and/or current of each electrode may be independently controlled.

At a given location of the weld, each electrode in general contributes weld bead material at different times during the weld process. The metal deposition rate, heat input, and other welding parameters for that location depend upon the combined effect of the several electrodes of the tandem arrangement, but the contributions of the several electrodes are separated in time.

The present invention contemplates an improved method and apparatus according to the preambles of claims 1 and 10, respectively, that overcome the above-mentioned limitations and others.

## Summary

The invention provides a method for monitoring a tandem welding process and a tandem welding system according to claim 1 and 4, respectively.

According to one aspect, a method is provided for monitoring a tandem welding process employing a plurality of tandem electrodes. A welding parameter is measured for each tandem electrode. The measured welding parameters are shifted to a reference. The measured and shifted welding parameters of the tandem electrode are combined at the reference.

According to another aspect, a tandem welding system is disclosed. A plurality of spaced apart electrodes are arranged to travel at a common travel speed. The plurality of spaced apart electrodes cooperatively perform a weld. A data storage medium stores measured data for each electrode during the performing of the weld. A processor performs a process comprising: for each electrode, recalling measured data corresponding to the electrode passing a reference position; and combining the recalled measured data of the plurality of spaced apart electrodes to compute a weld parameter of the tandem welding system at the reference position.

According to yet another aspect, a tandem welding method using the monitoring method of any one of claims 1 to 3 is provided. A tandem welding process is performed using a plurality of electrodes arranged at fixed relative positions to one another and cooperatively forming a weld. A welding parameter of each of the plurality of electrodes is measured during the welding process. Welding parameter values for each electrode corresponding to the electrode welding at a selected position are determined. A tandem welding parameter of the tandem welding process is computed at the selected position based on the determined welding parameter values of the plurality of electrodes.

Numerous advantages and benefits of the present invention will become apparent to those of ordinary skill in the art upon reading the following detailed description of the preferred embodiment.

## Brief Description of the Drawing

The invention may take form in various components and arrangements of components, and in various process operations and arrangements of process operations. The drawings are only for the purpose of illustrating preferred embodiments and are not to be construed as limiting the invention.

FIGURES 1 and 2 shows perspective and side views, respectively, illustrating a tandem arc welding process using four electrodes.

FIGURE 3 diagrammatically shows a simplified equivalent circuit of one of the electrodes, including suitable components for measuring weld current and weld voltage, or parameters corresponding thereto.

FIGURE 4 diagrammatically shows a wire feed system for one of the electrodes, including a wire feed speed controller that feeds electrode wire to the weld at a controlled wire feed speed.

FIGURE 5 diagrammatically shows a monitoring system for monitoring the tandem arc welding process.

FIGURE 6 shows a display plotting weld current, voltage, and wire feed speed for each electrode as a function of position.

FIGURE 7 shows a quality analysis display that displays total deposition rate of the tandem welding electrodes as a function of position as well as statistical information on the total deposition rate of the tandem welding electrodes.

FIGURE 8 shows a quality analysis display that displays total deposition rate of the tandem welding electrodes as a function of position as well as user-operable cursors for identifying total deposition rate at selected positions and differences between total deposition rates at different positions.

## Detailed Description of the Preferred Embodiments

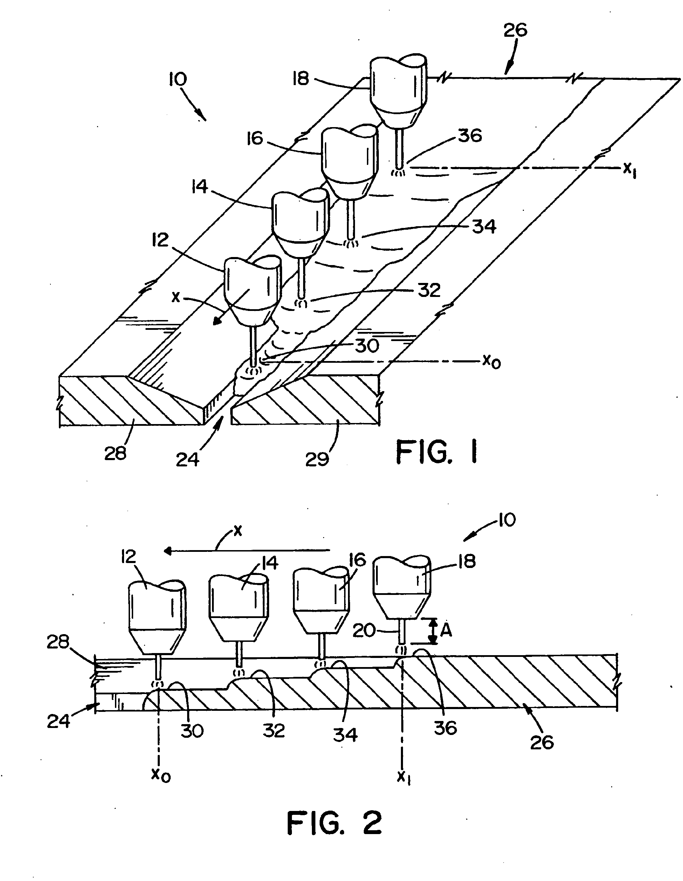

With reference to FIGURE 1, an electric arc welding process **10** employs tandem welding electrodes including in the illustrated embodiment four welding electrodes **12, 14, 16, 18.** While four electrodes are illustrated, other numbers of electrodes can be used in tandem. The tandem electrodes **12, 14, 16, 18** are arranged linearly and spaced apart along a direction designated the x-direction in FIGURES 1 and 2, and move together along the x-direction at a selected travel speed. In one embodiment, the electrodes **12, 14, 16, 18** are mounted to a common flange of a welding robot (not shown) so that the electrodes **12, 14, 16, 18** move along the designated x-direction at a common travel speed. Each of the tandem electrodes **12, 14, 16, 18** deposits weld material at a weld joint **24** of a workpiece **26** defined by two edges, components, or so forth **26, 28** that are to be joined together by welding.

In the embodiment illustrated in FIGURES 1 and 2, the electrodes **12, 14, 16, 18** are spaced apart from one another with an approximately equal spacing between each pair of nearest-neighboring electrodes. However, in other embodiments the spacing of nearest-neighboring electrodes is not the same for each pair of nearest-neighboring electrodes.

As illustrated in FIGURE 1, the joint **24** includes a gap that is to be filled with weld material. As the tandem electrodes move, the electrode **14** adds additional weld material to weld material previously deposited by the electrode **12**. The electrode **16** adds additional weld material to weld material previously deposited by the electrodes 12, **14**. The electrode **18** adds additional weld material to weld material previously deposited by the electrode **12, 14, 16.**

Each electrode has a stick-out of length "A" (indicated in FIGURE 2 for the electrode **20**) corresponding to a length of electrode wire sticking out of the electrode toward the weld. As best seen in FIGURE 2, the electrodes **12, 14, 16, 18** are staggered in height respective to the weld joint **24** so that the electrode **12** deposits deeper into the weld joint **24** than the electrode **14,** the electrode **14** deposits deeper into the weld joint **24** than the electrode **16,** and the electrode **16** deposits deeper into the weld joint **24** than the electrode **18**. This arrangement facilitates each electrode depositing a weld bead substantially on top of the weld bead deposited by the earlier-passing electrode or electrodes. In another approach, the stickout of the electrodes can be shortened such that each electrode deposits weld material substantially on top of the weld material deposited by the earlier-passing electrode or electrodes.

FIGURES 1 and 2 show the tandem welding process **10** at a fixed point in time. At the illustrated time, the electrode **12** is passing a location **30** of the weld joint **24**. The electrodes **14, 16, 18** have not yet passed over the location **30;** hence, only a relatively small weld bead deposited by the electrode **12** is disposed at the location **30**. At the illustrated time, the electrode **14** is passing a location **32** of the weld joint **24**. The electrode **12** has already passed the location **32** and deposited a first weld bead, which the electrode **14** adds additional material to. The electrodes **16, 18** have not yet passed over the location **32**. Because both electrodes **12, 14** have deposited at the location **32,** a larger amount of material is disposed at the location **32** compared with at the location **30**.

Similarly, at the illustrated time, the electrode **16** is passing a location **34** of the weld joint **24**. The electrodes **12, 14** have already passed the location **34** and deposited weld beads, which the electrode **16** adds to. The electrode **18** has not yet passed over the location **34**. Because both electrodes **12, 14, 16** have deposited at the location **34,** more weld material is disposed at the location **32** compared with the locations **30, 32**. Finally, at the illustrated time, the electrode **18** is passing a location **36** of the weld joint **24**. The electrodes **12, 14, 16** have already passed the location **36** and deposited weld material thereat, which the electrode **18** adds to. All four electrodes **12, 14, 16, 18** have deposited weld beads at the location **36** to form a composite weld bead at the location **36**.

The illustrated tandem welding process **10** is an example process. In other embodiments, a tandem torch is used for tandem welding. The tandem torch includes a plurality of electrode wires, optionally with each having an independently controllable voltage, current, wire feed speed, and stickout. In the embodiment shown in FIGURES 1 and 2, it will be appreciated that each electrode **12, 14, 16, 18** can operate substantially differently, such as using different voltages, different currents, different waveforms, and so forth. Different electrodes of the tandem combination can use axial spray transfer, pulsed spray transfer, a.c. or d.c. welding, waveform controlled welding, or so forth. Selection and operation of the electrode **12** is preferably optimized to produce a narrow weld bead having good penetration, while selection and operation of the electrode **18** is preferably optimized to produce a broader weld bead that fills in the wider portion of the weld joint **24**. The electrodes **14, 16** preferably have characteristics intermediate between those of electrodes **12, 18.**

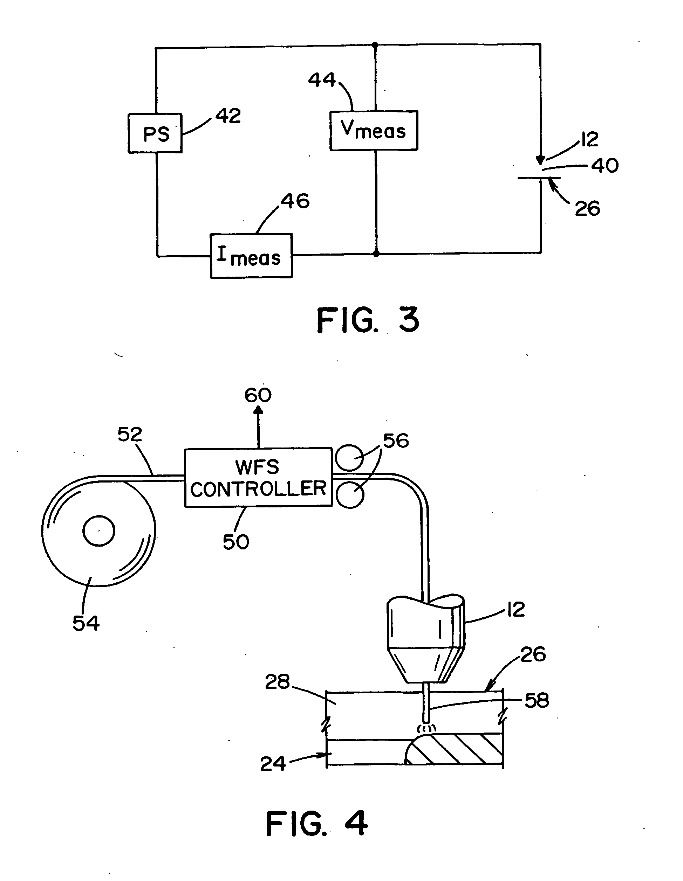

With reference to FIGURE 3, a simplified electronic equivalent circuit of the lead electrode **12** is shown. The electrode **12** is separated from the workpiece **26** by a gap **40**. A voltage across the gap **40** and an arc current flowing across the gap **40** are generated by a welding power supply **42**. A voltage measuring device **44,** such as a voltmeter, measures a voltage corresponding to the voltage across the gap **40**. Depending upon where the voltage measurement is performed, the measured voltage may include contributions besides the gap voltage, such as a resistive voltage drop contribution due to current flowing through the electrode wire or the workpiece. A current measuring device **46,** such as a current shunt, an ammeter, or the like, measures the current flowing across the gap **40.**

FIGURE 3 illustrates the simplified electronic equivalent circuit of the lead electrode **12.** However, it is understood that each of the other electrodes **14, 16, 18** also preferably include voltage and current measuring devices for measuring arc voltage and current, or parameters relating thereto. Each electrode is driven by a separate welding power supply, by a parallel combination of welding power supplies, by a single welding power supply with multiple outputs for driving the plurality of electrodes **12, 14, 16, 18,** or by some combination thereof. Some electrodes may be driven by an a.c. welding power supply while others are driven by a d.c. welding power supply. Moreover, the applied power may be phased or otherwise synchronized to reduce interactions between the arcs of the electrodes **12, 14, 16, 18.**

A weld heat input for each electrode **12, 14, 16, 18** is defined by the product of the arc voltage and arc current divided by the travel speed in units of power per unit length of travel. For a.c. welding, the weld heat input is suitably computed using a product of rms current time rms voltage, optionally corrected for a power factor related to phase offset between the current and voltage. In the case of waveform controlled welding, the weld heat input is suitably computed using an integral of the current-voltage product as described in U.S. published application 2003-0071024 A1. It is to be appreciated, however, that the weld heat input may be estimated or approximated, for example by neglecting the power factor term in a.c. welding, or by multiplying rms current times rms voltage in the case of waveform controlled welding.

With reference to FIGURE 4, a diagrammatic illustration of an electrode wire feed mechanism for the lead electrode **12** is shown. A wire feed speed (WFS) controller **50** draws electrode wire **52** from an electrode wire spool **54** and feeds the drawn electrode wire through suitable wire conveyance structures such as rollers **56** to the electrode **12.** A tip or stick-out **58** of the drawn electrode wire **52** sticks out of the electrode **12** and the arc transfers material from the electrode wire **52** to the workpiece **26.** The electrode wire **52** is consumed in this process, and is replaced by the wire feeding. A WFS output **60** of the WFS controller **50** corresponds to the WFS, which may change over time to control the arc length, sick-out **58,** or other welding parameter. The WFS output **60** can be an analog voltage proportional to the WFS, a digital value proportional to the WFS or the like.

FIGURE 4 diagrammatically illustrates the electrode wire feed mechanism for the lead electrode **12.** However, it is understood that each of the other electrodes **14, 16, 18** also include electrode wire feed mechanisms for feeding wire to the weld at a selected WFS. For each electrode, a deposition rate is suitably defined as a product of the cross-sectional area of the electrode wire **52** times the WFS times a density of the electrode wire.

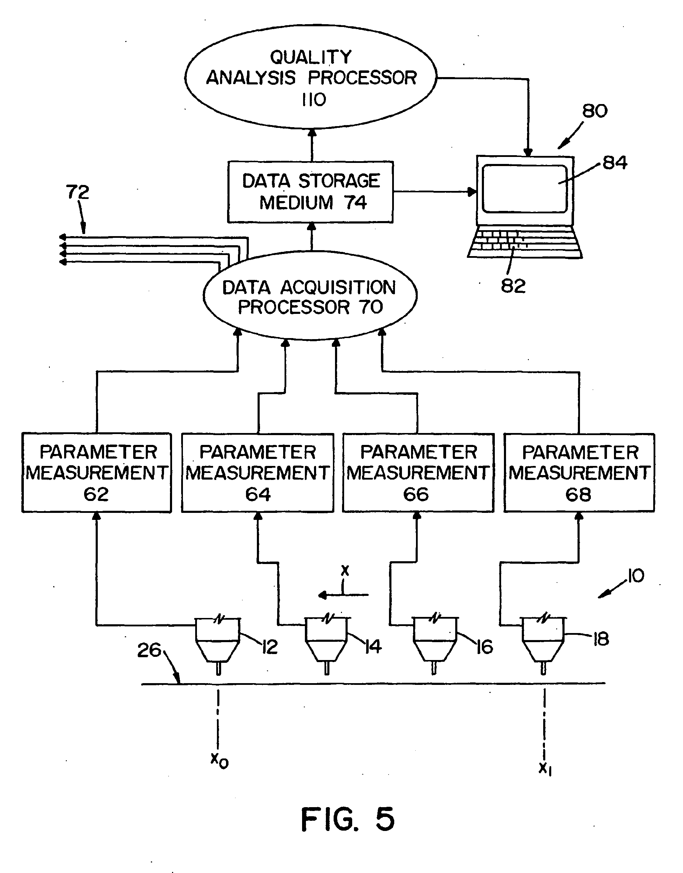

With reference to FIGURE 5, a method for monitoring the tandem welding process **10** is described. Each of the electrodes **12, 14, 16, 18** is monitored by one or more corresponding parameter measurement devices **62, 64, 66, 68.** For example, the one or more measurement devices **62** monitoring the electrode **12** can include the voltage and current measuring devices **44, 46** of FIGURE 3 and the WFS output **60** of the WFS controller **50** of FIGURE 4.

A data acquisition processor **70** receives measurement data from the parameter measurement devices **62, 64, 66, 68.** The measured welding parameter data are optionally used by the processor **70** to generate one or more feedback signals **72** for controlling the welding process **10.** For example, in a constant current welding process, the feedback signals **72** suitably include the measured arc currents of the electrodes **12, 14, 16, 18.** The welding process **10** adjusts parameters such as the WFS or the arc voltage of each electrode to keep the feedback arc currents **72** substantially constant. In some embodiments, the WFS or arc voltage is similarly controlled for each electrode to control the arc length or other welding characteristics.

The measured welding parameter data are also stored in a data storage medium **74,** which can be a substantially permanent, non-volatile memory such as a magnetic disk, or a transient, volatile memory such as random access memory (RAM), or some combination thereof. Optionally, the data acquisition processor **70** performs one or more computations or transformations of the measured data and stores the transformed measured welding parameter data.

In one embodiment, the parameter measurement devices **62, 64, 66, 68** output digital data measured at selected intervals (for example, one set of measurements every 100 milliseconds) and the stored data is digital data corresponding to discrete time values. In another embodiment, the parameter measurement devices **62, 64, 66, 68** perform analog measurements, and the data acquisition processor **70** includes analog-to-digital conversion circuitry that digitizes the measured data and stores digitized welding parameter measurements in the data storage medium **74.**

The stored measured welding parameters can be accessed by a human user or operator via a user interface **80.** The user interface includes on or more user inputs, such as an illustrated keyboard **82,** a pointing device such as a mouse or trackball, or the like. The user interface also includes a display or monitor **84,** which preferably has the capability of producing a graphical display, although a text-only display is also contemplated.

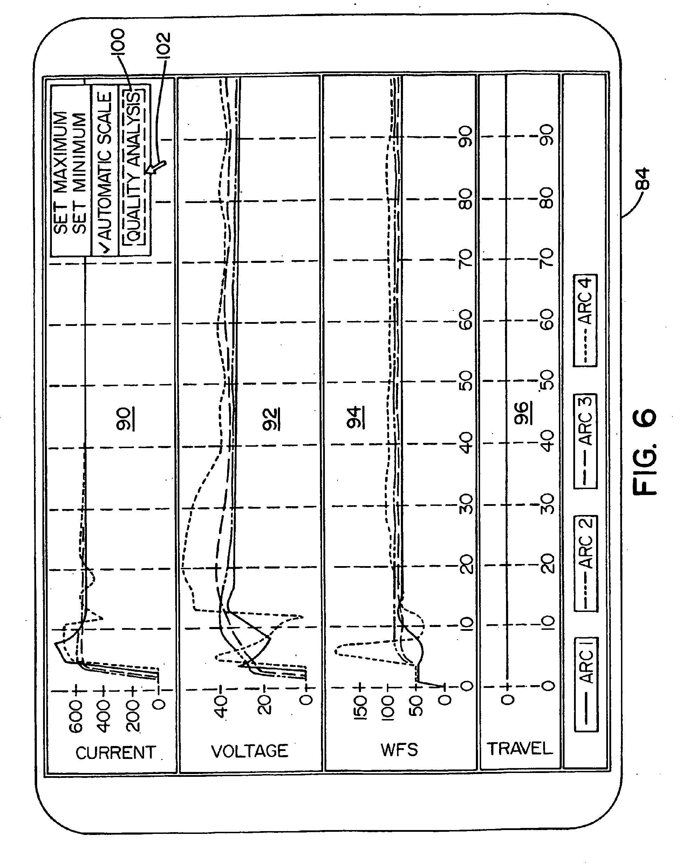

With reference to FIGURE 6, a suitable display or window on the monitor **84** shows an arc current welding parameter plot **90,** an arc voltage welding parameter **92,** and a WFS welding parameter **94.** In each plot **90, 92, 94** the welding parameter data for each of the four electrodes **12, 14, 16, 18** are plotted using a different type of solid, dashed, or dotted line. In the display of FIGURE 6, the four electrodes **12, 14, 16, 18** are identified as "ARC 1", "ARC 2", "ARC 3", and "ARC 4", respectively. The welding parameter data of the plots **90, 92, 94** are plotted against an abscissa **96** indicative of the travel position of the four ganged electrodes **12, 14, 16, 18.**

The display or window of FIGURE 6 is useful for certain diagnostic applications such as identifying a failed electrode. However, the data of each electrode alone is not indicative of the overall weld. For instance, as noted in reference to FIGURES 1 and 2, at the position **36** a completed composite weld bead includes weld bead contributions from all four electrodes **12, 14, 16, 18.** Hence, the user or operator has the option of selecting a quality analysis selector **100,** using for example a mouse pointer **102** operated by a mouse, trackball, or other pointing device. In another approach, a keyboard selection can be used to select quality analysis.

With reference returning to FIGURE 5, selection of the quality analysis selector **100** causes a quality analysis processor **110** to perform one or more analyses of the overall tandem welding process. The quality analysis processor reads the data storage medium **74** to obtain selected welding parameter data for each of the four electrodes **12, 14, 16, 18,** and computes a combined tandem welding parameter based thereon. The computed tandem welding parameter is shown in a display or window on the monitor **84.**

The combined tandem welding parameter may be of the same or different type from the welding parameter data for each of the four electrodes **12, 14, 16, 18.** For example, the welding parameter data for each of the four electrodes **12, 14, 16, 18** may be weld current, and the combined tandem welding parameter may be total weld current computed by summing the weld currents of the four electrodes **12, 14, 16, 18.** Alternatively, the welding parameter data for each of the four electrodes **12, 14, 16, 18** may be weld voltage and weld current, and the combined tandem welding parameter may be total weld heat input.

With continuing reference to FIGURE 5 and with returning reference to FIGURES 1 and 2, before combining measured weld parameter data from the electrodes **12, 14, 16, 18,** the weld parameter data is shifted to a common reference. For example, a suitable common reference is the position of the lead electrode **12,** which is designated as $x_0$ in FIGURES 1, 2, and 5. The position $x_0$ designates the position of the lead electrode in the x-direction along the weld joint **24.**

It is to be appreciated that the position $x_0$ generally changes as a function of time due to travel of the ganged tandem electrodes **12, 14, 16, 18.** For example, if the tandem welding process **10** initiates at a time t=0 with the lead electrode **12** at a position x=0, then the position $x_0$ at a later time t is suitably obtained by multiplying the time t by the travel speed. In another embodiment, the position $x_0$ is determined with reference to a travel position of the ganged plurality of electrodes **12, 14, 16, 18.** This travel position can be monitored, for example, by sensors on the welding robot.

The position of the other electrodes, such as the position of the trailing electrode **18** designated as $x_1$, at any given time t is given by $x_0+\Delta x$ where $\Delta x$ is a signed separation or spacing between the lead electrode **12** (or other reference electrode or reference position) and the other electrode.

In one embodiment, the data acquisition processor **70** performs a measured data transformation that transforms the measured welding parameter data as a function of time for each electrode **12, 14, 16, 18** into measured welding parameter data as a function of position. Data for the lead electrode **12** are suitably transformed into a function of position according to $x_0=St$ where S is the travel speed and t is the data acquisition time for each measured welding parameter datum. Data for the electrode **18** are suitably transformed into a function of position using $x_1=x_0+\Delta x$. Data for the other electrodes **14, 16** are similarly transformed using appropriate spacings or separations of the electrodes **14, 16** from the lead electrode **12.**

In another embodiment, the data acquisition processor 70 stores the measured welding data as a function of time, and the quality analysis processor **110** performs the conversion from time domain to position along the x-direction of travel using the above-discussed formulas.

Once data is converted to a function of position along the x-direction of travel, the tandem welding parameter is suitably computed by combining the welding parameter values of the plurality of electrodes **12, 14, 16, 18** at a given position. It will be appreciated that the combined data is temporally spaced apart in accordance with the described reference shifting.

In another embodiment, the data acquisition processor **70** stores the measured welding data as a function of time, and the quality analysis processor **110** computes the tandem welding parameter as a function of time as well. In this embodiment and designating the lead electrode **12** as the reference electrode, a datum value for lead electrode **12** acquired at a time **to** is combined with datum values for other electrodes acquired at times $t_0+\Delta x/S$, where $\Delta x$ is a signed separation or spacing between the lead electrode **12** and the other electrode and S is the travel speed.

In one embodiment, the computed tandem welding parameters include deposition rate and weld heat input. The deposition rate for the tandem welding process **10** is suitably computed by adding together the deposition rates of the plurality of electrodes **12, 14, 16, 18** at a given position, for example at the lead electrode reference position $x_0$. In order to compute the tandem welding deposition rate at $x_0$, the computation is suitably delayed by a time corresponding to the spatial separation $\Delta x$ between the lead electrode **12** and the last trailing electrode **18** divided by the travel speed, so that when the tandem welding deposition rate at $x_0$ is computed all four electrodes **12, 14, 16, 18** have performed deposition at the position $x_0$. Alternatively, the tandem deposition rate can be calculated using the position $x_1$ of the trailing electrode **18** as the reference position, thus ensuring that all four electrodes **12, 14, 16, 18** have performed deposition at the reference position when the tandem welding parameter is computed.

Still further, while it is generally convenient to use the position of one of the plurality of electrodes as the reference, it is contemplated to have the reference arranged at some position other than the positions of the various electrodes. For example, a position lying midway between the electrodes **14, 16** can be selected as the reference. Such a reference has the advantage of corresponding to a midpoint of the tandem electrodes.

Similarly, the weld heat input for the tandem welding process **10** is suitably computed by adding together the weld heat inputs of the plurality of electrodes **12, 14, 16, 18** at the given position.

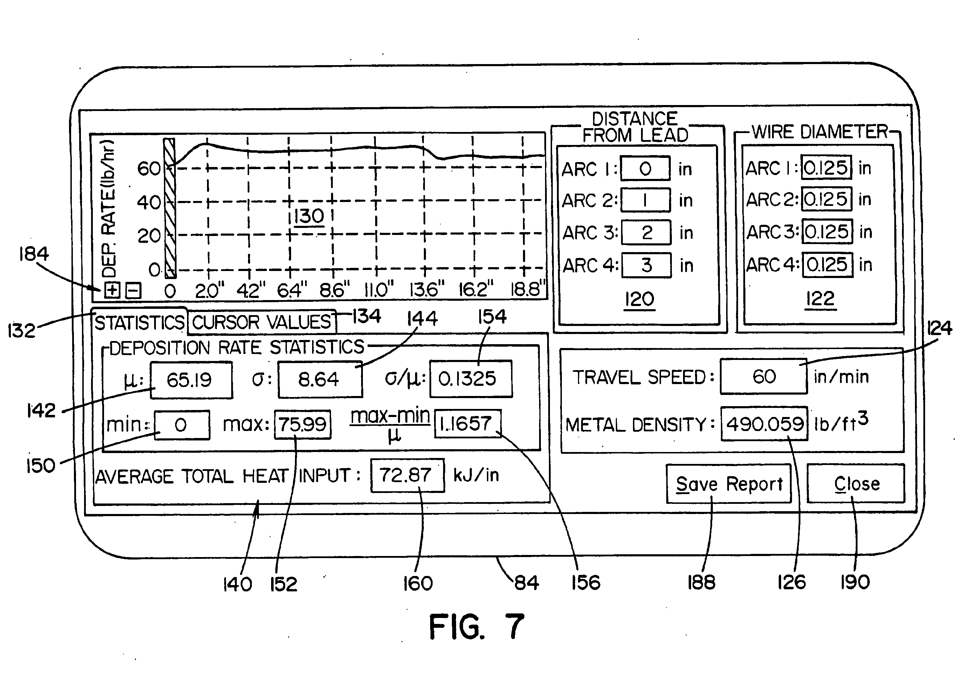

With reference to FIGURE 7, a suitable display or window shown on the monitor **84** for providing quality analysis is shown. In addition to measured parameters such as measured voltage, current, and WFS for each electrode, certain additional inputs provided by the user or operator are employed in performing the tandem welding computations. The electrode separations $\Delta x$ for each electrode from the lead electrode **12** are input in a set of inputs **120** titled "Distance from Lead".

In the example inputs shown in FIGURE 7, "ARC 1" which corresponds to the lead electrode **12** has $\Delta x=0$, indicating that electrode **12** is designated as the reference electrode. "ARC 2", "ARC 3", and "ARC 4", which correspond to the electrodes **14, 16, 18,** respectively, have separations $\Delta x$ from the lead electrode **12** of 1-inch, 2-inch, and 3-inch, respectively. These values correspond to a uniform nearest-neighbor electrodes spacing of 1-inch for each pair of nearest-neighboring electrodes of the four electrodes of the tandem arrangement. It will be appreciated, however, that non-uniform nearest-neighbor electrode spacings can also be used. Moreover, in some embodiments another electrode can be designated as the reference electrode by inputting suitable values into the "Distance from Lead" set of inputs **120.** For example, for the uniform 1-inch nearest-neighbor electrodes spacing, inputting values of "ARC 1"=-3-inch, "ARC 2"=-2-inch, "ARC 3"=-1-inch, "ARC 4"=0-inch, would set up the trailing electrode **18** as the reference electrode.

The user inputs also include a set of wire diameter inputs **122** for the electrode wires of the electrodes. In the example inputs shown in FIGURE 7, all four electrodes **12, 14, 16, 18** are using wire having 1/8-inch (0.125-inch) diameter. It will be appreciated, however, that the electrodes may use wires of different diameters. The diameter input is used to compute the cross-sectional area of the wire according to area $A=\pi(d/2)^2$ where A is the area and d is the wire diameter. It is also contemplated to use electrode wires having non-circular cross-sections, in which case suitable geometric area formulae and suitable user inputs are provided to compute the cross-sectional area. In another embodiment, the set of wire diameter inputs **122** can be replaced by a set of wire cross-sectional area inputs, thus obviating the wire cross-sectional area computation.

The user inputs further include a travel speed input **124** into which the user inputs the common travel speed of the ganged tandem electrodes **12, 14, 16, 18,** and a metal density input **126** into which the user inputs the electrode wire density. Although a single metal density input **126** is provided in the display of FIGURE 7, it is also contemplated to employ a separate metal density input for each electrode to accommodate the possible use of electrode wires of different materials in different electrodes. The metal density in the example window, 490.059 lb/ft$^3$, is suitable for steel. The travel speed in the example window of FIGURE 7 is 60 inches/min.

The set of wire diameter inputs **122,** the metal density input **126,** and the measured WFS for each electrode are used to compute the deposition rate for each wire according to:

$$R = \sum_i \pi \left(\frac{d_i}{2}\right)^2 \times \rho_{metal} \times (WFS)_i \qquad (1),$$

where R is the deposition rate, i indexes the electrodes (i=1...4 for the tandem welding process **10**), $d_i$ is the wire diameter of ith electrode, $\rho_{metal}$ is the density of the electrode wire (for example, 490 lb/ft$^3$ for steel), and $(WFS)_i$ is the wire feed speed of the ith electrode. The measured parameter $(WFS)_i$ for each electrode is suitably shifted to the reference time or position based on the travel speed and on the distance of the electrode from the lead electrode or other reference electrode, as described previously for computing tandem welding parameters.

The tandem welding heat input is suitably computed from the measured welding current and voltage parameters of the electrodes along with the travel speed as:

$$H = \frac{\sum_i V_i \times I_i}{S} \qquad (2),$$

where H is the tandem welding heat input, i indexes the electrodes (i=1...4 for the tandem welding process **10**), $V_i$ and $I_i$ are the measured voltage and current respectively, and S is the travel speed (60 inches/min in the example of FIGURE 7). Equation (2) is appropriate for d.c. welding, and may provide a reasonable approximation for a.c. and waveform controlled welding when $V_i$ and $I_i$ correspond to root-mean-square (rms) voltage and current, respectively. Optionally, the heat input term computed as the product $V_i \times I_i$ in Equation (2) can be modified to include additional terms such as a power factor term for a.c. welding. For waveform controlled welding, the product $V_i \times I_i$ may be replaced by instantaneous sampled voltage times instantaneous sampled current integrated over one or more waveforms, as described in U.S. published application 2003-0071024 A1. In any of these embodiments, the measured current and voltage for each electrode is suitably shifted to the reference time or position based on the travel speed and on the distance of the electrode from the lead or other reference electrode as described previously for computing tandem welding parameters.

With continuing reference to FIGURE 7, in a deposition rate graph **130,** the deposition rate of the tandem welding process is plotted as a function of lead electrode position or other reference position. The deposition rate graph **130** is suitably constructed by repeating the computation of the deposition rate of the tandem welding process in accordance with Equation (1) for a plurality of successive lead electrode positions $x_o$ as the welding process **10** progresses in the x-direction along the weld joint **24.** The tandem welding deposition rate may vary somewhat over time (or equivalently, over lead electrode position $x_o$) as illustrated in the example deposition rate graph **130.** For example, the WFS for each electrode **12, 14, 16, 18** may be controlled and dynamically adjusted to maintain a selected arc length, and these adjustments in WFS produce corresponding changes in the deposition rate in accordance with Equation (1).

With continuing reference to FIGURES 5 and 7, the quality analysis processor **110** preferably provides various user-selectable analysis tools. For example, the user can select between a "Statistics" tab **132** and a "Cursor values" tab **134**. The "Statistics" tab **132** brings up a set of statistical analysis values **140** shown in FIGURE 7, which include an average or mean deposition rate **142** and a variance, standard deviation, **144,** or other measure of the "spread" of the deposition rate over time or equivalently over weld position. The statistical values also include a minimum deposition rate **150** and a maximum deposition rate **152** over the statistically analyzed range. Other statistical quantities such as a ratio **154** of the average or mean deposition rate to the standard deviation and a ratio **156** of the deposition rate spread (that is, the difference between the maximum deposition rate **152** and the minimum deposition rate **150**) to the average or mean deposition rate can also be provided.

Moreover, an average heat input **160** is provided. The average heat input **160** is an average over the statistically analyzed range of the tandem heat input parameter computed, for example, using Equation (2).

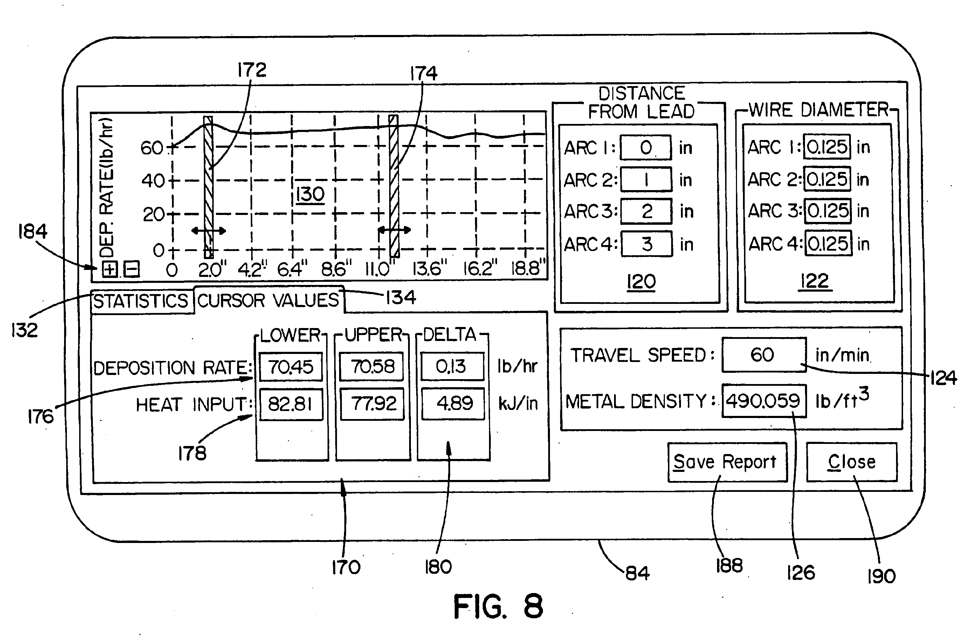

With continuing reference to FIGURES 5 and 7 and with further reference to FIGURE 8, user selection of the "Cursor values" tab **134** replaces the set of statistical analysis values **140** shown in FIGURE 7 with a set of cursor values **170** shown in FIGURE 8. The set of cursor values **170** identify tandem welding parameter values for welding at positions of lower and upper cursors **172, 174**. In the display illustrated in FIGURE 8, the tandem welding parameter values include tandem deposition rate **176** and tandem heat input **178**. The display also shows the difference values **180** between the welding parameter values at the upper and lower cursors **172, 174**. The user can move the cursors **172, 174** using a mouse pointer, keyboard arrow keys, or another suitable user input tool, and the set of cursor values **170** is updated to reflect the new cursor position or positions.

In one embodiment, the set of statistical analysis values **140** shown in FIGURE 6 are computed for a continuous region between the lower and upper cursors **172, 174**. This allows, for example, the statistical analysis to be performed over a continuous region that excludes a noisy region near the beginning or end of the welding process **10**. The user optionally can also manually rescale the deposition rate graph **130** using suitable mouse and/or keyboard operations or the like. In one embodiment, "+" and "-" zoom buttons **184** allow the user to zoom the deposition rate graph **130** in or out, respectively, by fixed increments, such as $\pm 2\times$ zoom factor increments for each click of one of the zoom buttons **184.** In another option, a double-click of the mouse within the deposition rate graph **130** causes the deposition rate at the position of the mouse pointer to be displayed. A second double-click causes the travel position at the position of the mouse pointer to be displayed.

To obtain a permanent record of the welding process **10**, a "Save Report" button **188** is clicked by the user. This operation brings up a Windows save dialog or other suitable interfacing window through which the user identifies a logical file location and filename for saving the tandem welding parameters in a file. The stored data can include, for example, the measured welding parameters for each electrode **12, 14, 16, 18** as well as the tandem welding parameters computed therefrom, along with the values of user supplied inputs **120, 122, 124, 126.** Although not shown in FIGURES 7 and 8, it is similarly contemplated to include a "Print" button which causes a suitable report to be printed on an attached printer, a network printer, or the like. User selection of a "Close" button **190** causes the analysis window to be closed.

The described analysis tools are examples only. Those skilled in the art can readily construct other tools. For example, a tandem welding input heat can be plotted in place of or in addition to the deposition rate graph **130**. While tabs **132, 134** switch between the statistical and cursor values, it is contemplated to display both sets of parameters **140, 170** in a side-by-side, tiled, or other suitable display arrangement. Similarly, the graphs **90, 92, 94** of individual electrode measured parameters can be displayed side-by-side, tiled, or otherwise combined with the displays shown in FIGURES 7 and 8. The choice of visual layout of the analysis data and the amount of data simultaneously displayed is suitably determined based on considerations such as the size and resolution of the display or monitor **84**. Moreover, a text-only display can be substituted for the described graphical display **84.**

Still further, it is to be appreciated that the data storage medium **74** shown in FIGURE 5 can be a temporary random access memory (RAM), a non-volatile magnetic disk storage, a temporary cache memory of a magnetic disk, a FLASH non-volatile solid-state memory, an optical disk, a combination of two or more of these storage media, or the like. While the processors **70, 110,** and data storage medium **74,** and the user interface **80** are shown in FIGURE 5 as distinct components, it is to be appreciated that these components can be integrated in various ways. In one contemplated approach, the processors **70, 110** are embodied as software running on a computer that embodies the user interface **80,** and the data storage medium **74** is a hard disk and/or RAM memory included in the computer or accessible by the computer over a local area network or the Internet. In another contemplated approach, the processors **70, 110,** and data storage medium **74** are integrated into a welding power supply that operates the electrodes **12, 14, 16, 18,** and the user interface **80** communicates with the welding power supply over a digital communication link.

The described embodiments employ tandem electrodes arranged linearly along an x-direction of travel. However, the analysis method and apparatus can apply to other configurations of a plurality of electrode that cooperate to form a weld. For example, the described analysis methods and apparatus can be applied to a parallel electrodes configuration in which a plurality of electrodes are arranged to simultaneously dispose weld beads at the same x-position along the x-direction of travel. This arrangement is accommodated by setting the "Distance from Lead" inputs **120** (shown in FIGURES 7 and 8) to zero for all the electrodes, since the parallel electrodes simultaneously deposit at the same position $x_o$.

The invention has been described with reference to the preferred embodiments. Obviously, modifications and alterations will occur to others upon reading and understanding the preceding detailed description. It is intended that the invention be construed as including all such modifications and alterations insofar as they come within the scope of the appended claims.

**Claims**

1. A method of monitoring a tandem welding process (10) employing a plurality of tandem electrodes (12, 14; 16, 18), whereby a welding parameter for each tandem electrode (12, 14; 16, 18) is measured, and whereby the welding parameter is the weld current, the weld voltage or the wire feed speed out put of a wire feed speed controller, **characterized in that** the method comprises:

   shifting the measured welding parameters to a reference position and/or reference time; and
   combining the measured and shifted welding parameters of the tandem electrodes (12, 14; 16, 18) at the reference; and
   wherein the measuring of a welding parameter for each tandem electrode (12, 14; 16, 18) comprises computing at least one of a deposition rate welding parameter and a weld heat input welding parameter, wherein the combining of the measured and shifted welding parameters comprises: summing the computed and shifted deposition rates of the tandem electrodes (12, 14; 16, 18) to produce a tandem electrodes deposition rate at the reference; and summing the computed and shifted weld heat inputs of the tandem electrodes (12, 14; 16, 18) to produce a tandem electrodes weld heat input at the reference;
   or
   wherein the measuring of a welding parameter for each tandem electrode (12, 14; 16, 18) comprises measuring a welding parameter as a function of time (t) for each electrode (12, 14; 16, 18) at discrete time; wherein the shifting comprises: transforming the welding parameter as a function of time (t) to a welding parameter as a function of position (x) based on a position ($x_o$) of a lead electrode (12) of the plurality of tandem electrodes (12, 14; 16, 18), a distance of the electrode (14, 16, 18) from the lead electrode (12), and a travel speed (S) of the plurality of tandem electrodes (12, 14; 16, 18); wherein the combining of the measured and shifted welding parameters comprises: summing the welding parameters as a function of position (x) to compute a welding parameter as a function of position for the plurality of tandem electrodes (12, 14; 16, 18).

2. The method as set forth in claim 1, **characterized in that** the shifting comprises:

   shifting a position coordinate (x) of the measured welding parameter of each tandem electrode (12, 14; 16, 18) by a distance of the electrode (12, 14; 16, 18) from a reference position ($x_o$).

3. The method as set forth in claim 1 or 2, **characterized in that** the shifting comprises:

   shifting a time coordinate (t) of the measured welding parameter of each tandem electrode (12, 14; 16, 18) by a travel time during which the electrode (12, 14; 16, 18) travels to the reference position ($x_o$).

4. A tandem welding system comprisinga plurality of spaced apart electrodes (12, 14; 16, 18) arranged to travel at a common travel speed (S), the plurality of spaced apart electrodes (12, 14; 16, 18) cooperatively performing a weld, **characterized in that** the system comprises:

   a data storage medium (74) storing measured welding parameter data for each electrode (12, 14; 16, 18) during the performing of the weld, whereby the measured welding parameter data is the weld voltage, the weld current or the wire feed speed output of a wire feed speed controller, and
   a processor (70) performing a process (10) comprising:

      for each electrode (12, 14; 16, 18), recalling measured data corresponding to the electrode (12, 14; 16, 18) passing a reference position ($x_o$) and/or reference time,
      combining the recalled measured data of the plurality of spaced apart electrodes (12, 14; 16, 18) at the reference, and
      wherein the measuring of a welding parameter for each tandem electrode (12, 14; 16, 18) comprises computing at least one of a deposition rate welding parameter and a weld heat input welding parameter, wherein the combining of the measured and shifted welding parameters comprises: summing the computed and shifted deposition rates of the tandem electrodes (12, 14; 16, 18) to produce a tandem electrodes deposition rate at the reference; and summing the computed and shifted weld heat inputs of the tandem electrodes (12, 14; 16, 18) to produce a tandem electrodes weld heat input at the reference; or

wherein the measuring of a welding parameter for each tandem electrode (12, 14; 16, 18) comprises measuring a welding parameter as a function of time (t) for each electrode (12, 14; 16, 18) at discrete time; wherein the shifting comprises: transforming the welding parameter as a function of time (t) to a welding parameter as a function of position (x) based on a position ($x_o$) of a lead electrode (12) of the plurality of tandem electrodes (12, 14; 16, 18), a distance of the electrode (14, 16, 18) from the lead electrode (12), and a travel speed (S) of the plurality of tandem electrodes (12, 14; 16, 18); wherein the combining of the measured and shifted welding parameters comprises: summing the welding parameters as a function of position (x) to compute a welding parameter as a function of position for the plurality of tandem electrodes (12, 14; 16, 18).

5. The tandem welding sys tem as set forth in claim 4, **characterized in that** the electrodes (12, 14; 16, 18) are spaced apart linearly along a direction of travel, and that the recalling of measured data corresponding to the electrode (12, 14; 16, 18) passing a reference is position ($x_o$) comprises:

dividing a distance of the electrode (12, 14; 16, 18) from a reference electrode of the plurality of spaced apart electrodes (12, 14; 16, 18) by the common travel speed (S) to determine a time shift between measured data of the reference electrode and measured data of the electrode (12, 14; 16, 18).

6. The tandem welding system as set forth in claim 4, **characterized in that** the recalling of measured data corresponding to the electrode (12, 14; 16, 18) passing a reference position ($x_o$) further comprises:

determining a time at which the reference electrode passed the reference position ($x_o$) based on a travel position of the plurality of spaced apart electrodes (12, 14; 16, 18) arranged to travel at a common travel speed (S).

7. The tandem welding system as set forth in claim 4, **characterized in that** the system further comprises:

one or more voltage measuring devices (44) measuring a voltage as a function of time (t) associated with each of the plurality of spaced apart electrodes (12, 14; 16, 18); and one or more current measuring devices (46) measuring a current as a function of time (t) associated with each of the plurality of spaced apart electrodes (12, 14; 16, 18); wherein the measured data stored in the data storage medium (74) for each electrode (12, 14; 16, 18) includes at least the measured voltage and the measured current.

8. The tandem welding system as set forth in claim 7, **characterized in that** the measured data further includes a weld heat input for each electrode (12, 14; 16, 18) computed from the measured voltage and current, the combining of the recalled measured data of the plurality of spaced apart electrodes (12, 14; 16, 18) to compute a weld parameter of the tandem welding system at the reference position ($x_o$) comprising:

summing the recalled weld heat input of each electrode (12, 14; 16, 18) to compute a tandem weld heat input parameter of the tandem welding system at the reference position ($x_o$).

9. The tandem welding system as set forth in claim 4, **characterized in that** the system further comprises:

one or more wire feed speed controllers (50) determining a wire feed speed associated with each of the plurality of spaced apart electrodes (12, 14; 16, 18), wherein the measured data stored in the data storage medium (74) for each electrode (12, 14; 16, 18) includes at least a deposition rate as a function of time (t) for each electrode (12, 14; 16, 18), the deposition rate being computed based on at least the measured wire feed speed.

10. The tandem welding system as set forth in claim 4, **characterized in that** the processor performs the process (10) for a plurality of different reference positions to produce the weld parameter of the tandem welding system as a function of position (x), and the tandem welding system further comprises:

a graphical user display (84) providing a first window showing at least the weld parameter of the tandem welding system as a function of position (x).

11. The tandem welding system as set forth in claim 10, **characterized in that** the first window includes at least one user-manipulated cursor (172, 174) indicating the weld parameter at a position of the cursor (172, 174).

12. The tandem welding system as set forth in claim 10, **characterized in that** the first window further includes at least two user-manipulated cursors (172, 174) and indicates a difference between the weld parameter values at the positions of the two cursors (172, 174).

13. The tandem welding system as set forth in one of the claims 4 to 12, **characterized in that** the spacing of nearest-neighbouring electrodes (12, 14; 16, 18) is not the same for each pair of nearest-neighbouring electrodes (12, 14; 16, 18).

14. A tandem welding method comprising performing a tandem welding process (10) using a plurality of electrodes (12, 14; 16, 18) arranged at fixed relative positions to one another and cooperatively forming a weld **characterized by** performing the method of one of the claims 1 to 4 to monitor the performed tandem welding process (10).

**Patentansprüche**

1. Verfahren zum Überwachen eines Tandem-Schweißprozesses (10), bei dem mehrere Tandemelektroden (12, 14; 16, 18) zum Einsatz kommen, wobei ein Schweißparameter für jede Tandemelektrode (12, 14; 16, 18) gemessen wird, und wobei der Schweißparameter der Schweißstrom, die Schweißspannung oder das Drahtzufuhrgeschwindigkeits-Ausgangssignal einer Drahtzufuhrgeschwindigkeits-Steuereinheit ist,
   **dadurch gekennzeichnet, dass** das Verfahren Folgendes umfasst:

   Verschieben der gemessen Schweißparameter auf eine Referenzposition und/oder eine Referenzzeit; und Kombinieren der gemessenen und verschobenen Schweißparameter der Tandemelektroden (12, 14; 16, 18) an der Referenz; und
   wobei die Messung eines Schweißparameters für jede Tandemelektrode (12, 14; 16, 18) das Berechnen eines Ablagerungsraten-Schweißparameters und/oder eines Schweißwärmeeingangs-Schweißparameters umfasst, wobei das Kombinieren des gemessenen und verschobenen Schweißparameters Folgendes umfasst: Addieren der berechneten und verschobenen Ablagerungsraten der Tandemelektroden (12, 14; 16, 18) zum Bilden einer Tandemelektroden-Ablagerungsrate an der Referenz; und Addieren der berechneten und verschobenen Schweißwärmeeingänge der Tandemelektroden (12, 14; 16, 18) zum Bilden eines Tandemelektroden-Schweißwärmeeingangs an der Referenz;
   oder
   wobei die Messung eines Schweißparameters für jede Tandemelektrode (12, 14; 16, 18) das Messen eines Schweißparameters als eine Funktion der Zeit (t) für jede Elektrode (12, 14; 16, 18) bei Diskretzeit umfasst; wobei das Verschieben Folgendes umfasst: Transformieren des Schweißparameters als eine Funktion der Zeit (t) in einen Schweißparameter als eine Funktion der Position (x) auf der Grundlage einer Position ($x_o$) einer Führungselektrode (12) der mehreren Tandemelektroden (12, 14; 16, 18), einer Distanz der Elektrode (14, 16, 18) von der Führungselektrode (12) und einer Vorschubgeschwindigkeit (S) der mehreren Tandemelektroden (12, 14; 16, 18); wobei das Kombinieren der gemessenen und verschobenen Schweißparameter Folgendes umfasst: Addieren der Schweißparameter als eine Funktion der Position (x) zum Berechnen eines Schweißparameters als eine Funktion der Position für die mehreren Tandemelektroden (12, 14; 16, 18).

2. Verfahren nach Anspruch 1, **dadurch gekennzeichnet, dass** das Verschieben Folgendes umfasst:

   Verschieben einer Positionskoordinate (x) des gemessenen Schweißparameters jeder Tandemelektrode (12, 14; 16, 18) um eine Distanz der Elektrode (12, 14; 16, 18) aus einer Referenzposition ($x_o$).

3. Verfahren nach Anspruch 1 oder 2, **dadurch gekennzeichnet, dass** das Verschieben Folgendes umfasst:

   Verschieben einer Zeitkoordinate (t) des gemessenen Schweißparameters jeder Tandemelektrode (12, 14; 16, 18) um eine Vorschubzeit, während der sich die Elektrode (12, 14; 16, 16) zu der Referenzposition ($x_o$) bewegt.

4. Tandem-Schweißsystem, das mehrere voneinander beabstandete Elektroden (12, 14; 16, 18) umfasst, die dafür ausgelegt sind, sich mit einer gemeinsamen Vorschubgeschwindigkeit (S) zu bewegen, wobei die mehreren voneinander beabstandeten Elektroden (12, 14; 16, 18) im Zusammenwirken eine Schweißung ausführen, **dadurch gekennzeichnet, dass** das System Folgendes umfasst:

   ein Datenspeichermedium (74), das gemessene Schweißparameterdaten für jede Elektrode (12, 14; 16, 18) während der Ausführung der Schweißung speichert, wobei die gemessenen Schweißparameterdaten die Schweißspannung, der Schweißstrom oder das Drahtzufuhrgeschwindigkeits-Ausgangssignal einer Drahtzufuhrgeschwindigkeits-Steuereinheit sind, und
   einen Prozessor (70), der einen Prozess (10) ausführt, der Folgendes umfasst:
   für jede Elektrode (12, 14; 16, 18): erneutes Abrufen gemessener Daten, die der Situation entsprechen, wo die Elektrode (12, 14; 16, 18) eine Referenzposition ($x_o$) und/oder eine Referenzzeit passiert,
   Kombinieren der erneut abgerufenen gemessenen Daten der mehreren voneinander beabstandeten Elektroden (12, 14; 16, 18) an der Referenz, und
   wobei die Messung eines Schweißparameters für jede Tandemelektrode (12, 14; 16, 18) das Berechnen eines Ablagerungsraten-Schweißparameters und/oder eines Schweißwärmeeingangs-Schweißparameters umfasst, wobei das Kombinieren des gemessenen und verschobenen Schweißparameters Folgendes umfasst: Addieren der berechneten und verschobenen Ablagerungsraten der Tandemelektroden (12, 14; 16, 18) zum Bilden einer Tandemelektroden-Ablagerungsrate an der Referenz; und Addieren der berechneten und verschobenen Schweißwärmeeingänge der Tandemelektroden (12, 14; 16, 18) zum Bilden eines Tandemelektroden-Schweißwärmeeingangs an der Referenz;

   oder
   wobei die Messung eines Schweißparameters für jede Tandemelektrode (12, 14; 16, 18) das Messen eines Schweißparameters als eine Funktion der Zeit (t) für jede Elektrode (12, 14; 16, 18) bei Diskretzeit umfasst; wobei das Verschieben Folgendes umfasst: Transformieren des Schweißparameters als eine Funktion der Zeit (t) in einen Schweißparameter als eine Funktion der Position (x) auf der Grundlage einer Position ($x_o$) einer Führungselektrode (12) der mehreren Tandemelektroden (12, 14; 16, 18), einer Distanz der Elektrode (14, 16, 18) von der Führungselektrode (12) und einer Vorschubgeschwindigkeit (S) der mehreren Tandemelektroden (12, 14; 16, 18); wobei das Kombinieren der gemessenen und verschobenen Schweißparameter Folgendes umfasst: Addieren der Schweißparameter als eine Funktion der Position (x) zum Berechnen eines Schweißparameters als eine Funktion der Position für die mehreren Tandemelektroden (12, 14; 16, 18).

5. Tandem-Schweißsystem nach Anspruch 4, **dadurch gekennzeichnet, dass** die Elektroden (12, 14; 16, 18) linear entlang einer Vorschubrichtung voneinander beabstandet sind und dass das erneute Abrufen gemessener Daten, die der Situation entsprechen, wo die Elektrode (12, 14; 16, 18) eine Referenzposition ($x_o$) passiert, Folgendes umfasst:

   Teilen einer Distanz der Elektrode (12, 14; 16, 18) von einer Referenzelektrode der mehreren voneinander beabstandeten Elektroden (12, 14; 16, 18) durch die gemeinsame Vorschubgeschwindigkeit (S) zum Bestimmen einer Zeitverschiebung zwischen gemessenen Daten der Referenzelektrode und gemessenen Daten der Elektrode (12, 14; 16, 18).

6. Tandem-Schweißsystem nach Anspruch 4, **dadurch gekennzeichnet, dass** das erneute Abrufen gemessener Daten, die der Situation entsprechen, wo die Elektrode (12, 14; 16, 18) eine Referenzposition ($x_o$) passiert, Folgendes umfasst:

   Bestimmen einer Zeit, zu der die Referenzelektrode die Referenzposition ($x_o$) passierte, auf der Grundlage einer Vorschubposition der mehreren voneinander beabstandeten Elektroden (12, 14; 16, 18), die dafür ausgelegt sind, sich mit einer gemeinsamen Vorschubgeschwindigkeit (S) zu bewegen.

7. Tandem-Schweißsystem nach Anspruch 4, **dadurch gekennzeichnet, dass** das System des Weiteren Folgendes umfasst:

   eine oder mehrere Spannungsmessvorrichtungen (44), die eine Spannung als eine Funktion der Zeit (t) messen, die jeder der mehreren voneinander beabstandeten Elektroden (12, 14; 16, 18) zugeordnet ist; und
   eine oder mehrere Strommessvorrichtungen (46), die einen Strom als eine Funktion der Zeit (t) messen, die jeder der mehreren voneinander beabstandeten Elektroden (12, 14; 16, 18) zugeordnet ist;

wobei die gemessenen Daten, die in dem Datenspeichermedium (74) für jede Elektrode (12, 14; 16, 18) gespeichert sind, mindestens die gemessene Spannung und den gemessenen Strom enthalten.

8. Tandem-Schweißsystem nach Anspruch 7, **dadurch gekennzeichnet, dass** die gemessenen Daten des Weiteren einen Schweißwärmeeingang für jede Elektrode (12, 14; 16, 18) enthalten, der aus der gemessenen Spannung und dem gemessenen Strom berechnet wird, wobei das Kombinieren der erneut abgerufenen gemessenen Daten der mehreren voneinander beabstandeten Elektroden (12, 14; 16, 18) zum Berechnen eines Schweißparameters des Tandem-Schweißsystems an der Referenzposition ($x_o$) Folgendes umfasst:

Addieren des erneut abgerufenen Schweißwärmeeingangs jeder Elektrode (12, 14; 16, 18) zum Berechnen eines Tandem-Schweißwärmeeingangsparameters des Tandem-Schweißsystems an der Referenzposition ($x_o$).

9. Tandem-Schweißsystem nach Anspruch 4, **dadurch gekennzeichnet, dass** das System des Weiteren Folgendes umfasst:

eine oder mehrere Drahtzufuhrgeschwindigkeits-Steuereinheiten (50), die eine Drahtzufuhrgeschwindigkeit bestimmen, die jeder der mehreren voneinander beabstandeten Elektroden (12, 14; 16, 18) zugeordnet ist, wobei die gemessenen Daten, die in dem Datenspeichermedium (74) für jede Elektrode (12, 14; 16, 18) gespeichert sind, mindestens eine Ablagerungsrate als eine Funktion der Zeit (t) für jede Elektrode (12, 14; 16, 18) enthalten, wobei die Ablagerungsrate auf der Grundlage mindestens der gemessenen Drahtzufuhrgeschwindigkeit berechnet wird.

10. Tandem-Schweißsystem nach Anspruch 4, **dadurch gekennzeichnet, dass** der Prozessor den Prozess (10) für mehrere verschiedene Referenzpositionen zum Bilden des Schweißparameters des Tandem-Schweißsystems als eine Funktion der Position (x) ausführt, und wobei das Tandem-Schweißsystem des Weiteren Folgendes umfasst:

eine grafische Benutzeranzeige (84), die ein erstes Fenster bereitstellt, das mindestens den Schweißparameter des Tandem-Schweißsystems als eine Funktion der Position (x) zeigt.

11. Tandem-Schweißsystem nach Anspruch 10, **dadurch gekennzeichnet, dass** das erste Fenster mindestens einen vom Benutzer betätigten Cursor (172, 174) enthält, der den Schweißparameter an einer Position des Cursors (172, 174) anzeigt.

12. Tandem-Schweißsystem nach Anspruch 10, **dadurch gekennzeichnet, dass** das erste Fenster des Weiteren mindestens zwei vom Benutzer betätigte Cursor (172, 174) enthält und einen Unterschied zwischen den Schweißparameterwerten an den Positionen der zwei Cursor (172, 174) anzeigt.

13. Tandem-Schweißsystem nach einem der Ansprüche 4 bis 12, **dadurch gekennzeichnet, dass** die Beabstandung der am nächsten beieinanderliegenden Elektroden (12, 14; 16, 18) nicht für jedes Paar am nächsten beieinanderliegender Elektroden (12, 14; 16, 18) die gleiche ist.

14. Tandem-Schweißverfahren, das Folgendes umfasst: Ausführen eines Tandem-Schweißprozesses (10) unter Verwendung mehrerer Elektroden (12, 14; 16, 18), die an festen Positionen relativ zueinander angeordnet sind und im Zusammenwirken eine Schweißnaht herstellen, **gekennzeichnet durch** Ausführen des Verfahrens nach einem der Ansprüche 1 bis 4 zum Überwachen des ausgeführten Tandem-Schweißprozesses (10).

**Revendications**

1. Méthode de surveillance d'un procédé de soudage en tandem (10) employant une pluralité d'électrodes en tandem (12, 14 ; 16, 18), de telle manière qu'un paramètre de soudage pour chaque électrode en tandem (12, 14 ; 16, 18) soit mesuré, et de telle manière que le paramètre de soudage soit le courant de soudage, la tension de soudage ou la sortie de vitesse d'alimentation de fil d'un contrôleur de vitesse d'alimentation de fil, **caractérisée en ce que** la méthode comprend :

le décalage des paramètres de soudage mesurés à une position de référence et/ou un temps de référence ; et la combinaison des paramètres de soudage mesurés et décalés des électrodes en tandem (12, 14 ; 16, 18) à la référence, et
dans laquelle la mesure d'un paramètre de soudage pour chaque électrode en tandem (12, 14 ; 16, 18) comprend le calcul d'au moins l'un d'un paramètre de soudage de taux de dépôt et un paramètre de soudage d'entrée de chaleur de soudage, dans laquelle la combinaison des paramètres de soudage mesurés et décalés comprend : la somme des taux de dépôt calculés et décalés des électrodes en tandem (12, 14 ; 16, 18) pour produire un taux de dépôt d'électrodes en tandem à la référence ; et la somme des entrées de chaleur de soudage calculées et décalées des électrodes en tandem (12, 14 ; 16, 18) pour produire une entrée de chaleur de soudage d'électrodes en tandem à la référence ;
ou
dans laquelle la mesure d'un paramètre de soudage pour chaque électrode en tandem (12, 14 ; 16, 18) comprend la mesure d'un paramètre de soudage en fonction du temps (t) pour chaque électrode (12, 14 ; 16, 18) à un temps discret; dans laquelle le décalage comprend : la transformation du paramètre de soudage en fonction du temps (t) en un paramètre de soudage en fonction de la position (x) sur la base d'une position ($x_o$) d'une électrode principale (12) de la pluralité d'électrodes en tandem (12, 14 ; 16, 18), une distance de l'électrode (14, 16, 18) par rapport à l'électrode principale (12), et une vitesse de déplacement (S) de la pluralité d'électrodes en tandem (12, 14 ; 16, 18) ; dans laquelle la combinaison des paramètres de soudage mesurés et décalés comprend : la somme des paramètres de soudage en fonction de la position (x) pour calculer un paramètre de soudage en fonction de la position pour la pluralité d'électrodes en tandem (12, 14 ; 16, 18).

2. Méthode selon la revendication 1, **caractérisée en ce que** le décalage comprend:

le décalage d'une coordonnée de position (x) du paramètre de soudage mesuré de chaque électrode en tandem (12, 14 ; 16, 18) d'une distance de l'électrode (12, 14 ; 16, 18) par rapport à une position de référence ($x_o$).

3. Méthode selon la revendication 1 ou 2, **caractérisée en ce que** le décalage comprend :

le décalage d'une coordonnée de temps (t) du paramètre de soudage mesuré de chaque électrode en tandem (12, 14 ; 16, 18) d'un temps de déplacement au cours duquel l'électrode (12, 14 ; 16, 18) se déplace à la position de référence ($x_o$).

4. Système de soudage en tandem comprenant une pluralité d'électrodes espacées (12, 14 ; 16, 18) agencées pour se déplacer à une vitesse de déplacement commune (S), la pluralité d'électrodes espacées (12, 14 ; 16, 18) effectuant un soudage en coopération,
**caractérisé en ce que** le système comprend :

un support de stockage de données (74) stockant des données de paramètre de soudage mesuré pour chaque électrode (12, 14 ; 16, 18) au cours de l'exécution du soudage, de telle manière que les données de paramètre de soudage mesuré soient la tension de soudage, le courant de soudage ou la sortie de vitesse d'alimentation de fil d'un contrôleur de vitesse d'alimentation de fil, et
un processeur (70) effectuant un procédé (10) comprenant :
pour chaque électrode (12, 14 ; 16, 18), le rappel de données mesurées correspondant à l'électrode (12, 14 ; 16, 18) passant à une position de référence ($x_o$) et/ou à un temps de référence,
la combinaison des données mesurées rappelées de la pluralité d'électrodes espacées (12, 14 ; 16, 18) à la référence, et
dans lequel la mesure d'un paramètre de soudage pour chaque électrode en tandem (12, 14 ; 16, 18) comprend le calcul d'au moins l'un d'un paramètre de soudage de taux de dépôt et un paramètre de soudage d'entrée de chaleur de soudage, dans lequel la combinaison des paramètres de soudage mesurés et décalés comprend : la somme des taux de dépôt calculés et décalés des électrodes en tandem (12, 14 ; 16, 18) pour produire un taux de dépôt d'électrodes en tandem à la référence ; et la somme des entrées de chaleur de soudage calculées et décalées des électrodes en tandem (12, 14 ; 16, 18) pour produire une entrée de chaleur de soudage d'électrodes en tandem à la référence ;
ou
dans lequel la mesure d'un paramètre de soudage pour chaque électrode en tandem (12, 14 ; 16, 18) comprend la mesure d'un paramètre de soudage en fonction du temps (t) pour chaque électrode (12, 14 ; 16, 18) à un temps discret ; dans lequel le décalage comprend : la transformation du paramètre de soudage en fonction du temps (t) en un paramètre de soudage en fonction de la position (x) sur la base d'une position ($x_o$) d'une électrode principale (12) de la pluralité d'électrodes en tandem (12, 14 ; 16, 18), une distance de l'électrode (14, 16, 18) par rapport à l'électrode principale (12), et une vitesse de déplacement (S) de la pluralité d'électrodes en tandem (12, 14 ; 16, 18) ; dans lequel la combinaison des paramètres de soudage mesurés et décalés comprend : la somme des paramètres de soudage en fonction de la position (x) pour calculer un paramètre de soudage en fonction de la position pour la pluralité d'électrodes en tandem (12, 14 ; 16, 18).

5. Système de soudage en tandem selon la revendication 4, **caractérisé en ce que** les électrodes (12, 14 ; 16, 18) sont espacées linéairement dans une direction de déplacement, et **en ce que** le rappel de données mesurées correspondant à l'électrode (12, 14 ; 16, 18) passant à une position de référence ($x_o$) comprend :

la division d'une distance de l'électrode (12, 14 ; 16, 18) à une électrode de référence de la pluralité d'électrodes espacées (12, 14 ; 16, 18) par la vitesse de déplacement commune (S) pour déterminer un décalage de temps entre les données mesurées de l'électrode de référence et les données mesurées de l'électrode (12, 14 ; 16, 18).

6. Système de soudage en tandem selon la revendication 4, **caractérisé en ce que** le rappel des données mesurées correspondant à l'électrode (12, 14 ; 16, 18) passant à une position de référence ($x_o$) comprend en outre :

la détermination d'un temps auquel l'électrode de référence a passé la position de référence ($x_o$) sur la base d'une position de déplacement de la pluralité d'électrodes espacées (12, 14 ; 16, 18) agencées pour se déplacer à une vitesse de déplacement commune (S).

7. Système de soudage en tandem selon la revendication 4, **caractérisé en ce que** le système comprend en outre :

un ou plusieurs dispositifs de mesure de tension (44) mesurant une tension en fonction du temps (t) associée à chacune de la pluralité d'électrodes espacées (12, 14 ; 16, 18) ; et
un ou plusieurs dispositifs de mesure d'intensité (46) mesurant une intensité en fonction du temps (t) associée à chacune de la pluralité d'électrodes espacées (12, 14 ; 16, 18) ;
dans lequel les données mesurées stockées dans le support de stockage de données (74) pour chaque électrode (12, 14 ; 16, 18) comprennent au moins la tension mesurée et le courant mesurée.

8. Système de soudage en tandem selon la revendication 7, **caractérisé en ce que** les données mesurées comprennent en outre une entrée de chaleur de soudage pour chaque électrode (12, 14 ; 16, 18) calculée à partir de la tension mesurée et de l'intensité mesurée, la combinaison des données mesurées rappelées de la pluralité d'électrodes espacées (12, 14 ; 16, 18) pour calculer un paramètre de soudage du système de soudage en tandem à la position de référence ($x_o$) comprenant :

la somme de l'entrée de chaleur de soudage rappelée de chaque électrode (12, 14 ; 16, 18) pour calculer un paramètre d'entrée de chaleur de soudage en tandem du système de soudage en tandem à la position de référence (x0).

9. Système de soudage en tandem selon la revendication 4, **caractérisé en ce que** le système comprend en outre :

un ou plusieurs contrôleurs de vitesse d'alimentation de fil (50) déterminant une vitesse d'alimentation de fil associée à chacune de la pluralité d'électrodes espacées (12, 14 ; 16, 18), dans lequel les données mesurées stockées dans le support de stockage de données (74) pour chaque électrode (12, 14 ; 16, 18) comprennent au moins un taux de dépôt en fonction du temps (t) pour chaque électrode (12, 14 ; 16, 18), le taux de dépôt étant calculé sur la base au moins de la vitesse d'alimentation de fil mesurée.

10. Système de soudage en tandem selon la revendication 4, **caractérisé en ce que** le processeur effectue le procédé (10) pour une pluralité de positions de référence différentes pour produire le paramètre de soudage du système de soudage en tandem en fonction de la position (x), et le système de soudage en tandem comprend en outre :

un affichage utilisateur graphique (84) fournissant une première fenêtre représentant au moins le paramètre de soudage du système de soudage en tandem en fonction de la position (x).

11. Système de soudage en tandem selon la revendication 10, **caractérisé en ce que** la première fenêtre comprend au moins un curseur manipulé par utilisateur (172, 174) indiquant le paramètre de soudage à une position du curseur (172, 174).

12. Système de soudage en tandem selon la revendication 10, **caractérisé en ce que** la première fenêtre comprend en outre au moins deux curseurs manipulés par utilisateur (172, 174) et indique une différence entre les valeurs de paramètre de soudage aux positions des deux curseurs (172, 174).

13. Système de soudage en tandem selon l'une des revendications 4 à 12, **caractérisé en ce que** l'espacement des électrodes voisines les plus proches (12, 14 ; 16, 18) n'est pas le même pour chaque paire d'électrodes voisines les plus proches (12, 14 ; 16, 18).

14. Méthode de soudage en tandem comprenant l'exécution d'un procédé de soudage en tandem (10) utilisant une pluralité d'électrodes (12, 14 ; 16, 18) agencées à des positions relatives fixes l'une par rapport à l'autre et formant en coopération un soudage **caractérisé par** l'exécution de la méthode selon l'une des revendications 1 à 4 pour surveiller le procédé de soudage en tandem (10).

FIG. 1

FIG. 2

FIG. 3

FIG. 4

QUALITY
ANALYSIS PROCESSOR
110

80

84

DATA STORAGE
MEDIUM 74

72

82

DATA ACQUISITION
PROCESSOR 70

PARAMETER
MEASUREMENT
62

PARAMETER
MEASUREMENT
64

PARAMETER
MEASUREMENT
66

PARAMETER
MEASUREMENT
68

$x$

10

26

12

14

16

18

$x_0$

$x_1$

## FIG. 5

FIG. 6

FIG. 7

EP 1 704 013 B1

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000084669 A
- WO 6111216 A, Stava
- WO 6207929 A, Stava
- WO 6291798 A, Stava
- WO 6472634 A, Houston
- US 20030071024 A1, Hsu
- WO 5278390 A, Blankenship
- US 4827101 A